# EUROPÄISCHE PATENTSCHRIFT

(11) **EP 0 542 766 B1**
(45) Veröffentlichungstag und Bekanntmachung des Hinweises auf die Patenterteilung: **24.01.1996**
(21) Anmeldenummer: 91912936.1
(22) Anmeldetag: 18.07.1991
(51) Int. Cl.: C09K 3/10

(54) **VERFAHREN ZUR HERSTELLUNG VON VERSCHLÜSSEN FÜR VERPACKUNGSBEHÄLTER**
PROCESS FOR PRODUCING CLOSURES OF PACKAGING CONTAINERS
PROCEDE DE FABRICATION DE FERMETURES DE RECIPIENTS D'EMBALLAGE

(30) Priorität: 10.08.1990 DE 4025327
(43) Veröffentlichungstag der Anmeldung: 26.05.1993
(73) Patentinhaber: BASF Lacke + Farben AG, D-48165 Münster-Hiltrup (DE)
(72) Erfinder: NÜSSEN, Peter, D-2863 Ritterhude 2 (DE); KRAUSE, Siegfried, D-4400 Münster (DE)
(74) Vertreter: Münch, Volker, Dr.
(86) Internationale Anmeldenummer: EP9101345
(87) Internationale Veröffentlichungsnummer: WO9202592

(56) Entgegenhaltungen:
- WO-A-90/10041
- GB-A- 2 167 426
- US-A- 4 507 443
- Derwent File Supplier JAPS Derwent Publication Ltd (London, GB) & JP,A, 59131669 (TAKEDA), 28-07-1984 siehe Zusammenfassung
- Derwent File Supplier WPIL Derwent Publication Ltd, (London, GB) & JP, A, 63156879 (SANYO), 29-06-1988

## Beschreibung

Gegenstand der vorliegenden Erfindung ist ein Verfahren zur Hertellung von Verschlüssen zum dichtend Verschlieben von Verpackungsbehältern, bei dem auf die Innenseite der Verschlüsse eine Dichtungsmasse appliziert und eingebrannt wird.

Die Erfindung betrifft außerdem Verschlüsse für Verpackungsbehälter, bei denen auf der Innenseite eine Dichtungsmasse appliziert und eingebrannt worden ist sowie Verpackungsbehälter mit diesen Verschlüssen.

Der Zweck der verschiedenen Verpackungsmaterialien ist der hermetische Abschluß des Füllgutes von den Umgebungseinflüssen, und zwar auch unter extremen Bedingungen, wie sie z.B. bei der Hitzesterilisation von Lebensmitteln herrschen. Um diese Isolierung der Füllgüter von der Umgebung zu gewährleisten, werden in Deckel und Verschlüsse, mit dem der Verpackungsbehälter verschlossen wird, geeignete Dichtungsmassen eingebracht. Kommerziell, d.h. wirtschaftlich befriedigende Dichtungsmatssen für Verschüsse müssen eine Anzahl kritischer Eigenschaften besitzen, durch die sie hochspezialisierte Werkstoffe und Zusammensetzungen darstellen.

Weiterhin werden die geforderten Eigenschaften der Dichtungsmassen auch vom Einsatzzweck der Verpackungen mitbestimmt.

So ist bei Lebensmittelverpackungen insbesondere die Beständigkeit der Dichtungsmassen gegenüber den Füllgütern bei der Sterilisation bzw. Pasteurisierung sowie der oft jahrelangen Lagerung der verpackten Lebensmittel von Bedeutung. Im Falle der technischen Verpackungen handelt es sich oftmals um chemisch recht reaktive bzw. aggressive Füllgüter, gegen die die Dichtungsmassen ebenfalls beständig sein sollen. Üblicherweise werden für Verschlüsse und Deckel von Verpackungen aus Glas und Metall Dichtungsmassen aus weichmacherhaltigen PVC-Plastisolen verwendet, wie sie im Falle der Verschlüsse für Gläser beispielsweise in der DE-AS 20 03 693 beschrieben sind.

Die als Dichtungmasse eingesetzten PVC-Plastisole bestehen in der Regel aus einem verpastbaren Polyvinylchlorid, das sich im besonderen durch ein definiertes Quellvermögen im Weichmächer auszeichnet, aus einem oder mehreren Weichmachern und ggf. Füllstoffen, Stabilisatoren, Pigmenten und Polyüiiylchlorid-Verarbeitungshilfsstoffen.

Die Formulierung von weichmacherhaltigen PVC-Plastisolen, deren Herstellung und Verarbeitung ist weitgehend in K. Weinmann, Beschichten mit Lacken und Kunststoffen, 1967, Verlag W.A. Colomb, Stuttgart, beschrieben.

Es ist bekannt, daß bei solchen PVC-Dichtungsmassen unter dem Einfluß der Füllgüter, insbesondere durch fettige und ölige Substanzen und bei thermischer Beanspruchung (Pasteurisation, Sterilisation) grundsätzlich eine Weichmachermigration aus der Dichtungsmasse sowie ein Anlösen und Anquëllen der Dichtungsmasse bei lösemittelhaltigen Füllgütern nicht verhindert werden kann.

Die Weichmachermigration kann in ihrer Größe derzeit gültige und in Diskussion befindliche lebensmittelrechtliche Vorschriften überschreiten. Weiterhin bedingt die Weichmachermigration unter Umständen einen Vakuumverlust bei pasteurisierten und sterilisierten Verpackungen sowie einen Verlust von Lösemitteln durch eine gesteigerte Gasdurchlässigkeit im Falle von technischen Verpackungen. Bei technischen Verpackungen besteht ebenfalls grundsätzlich das Problem der Verunreinigung der Füllgüter durch die Weichmachermigration und Anquellung bzw. Anlösung des Polyvinylchlorids. Ein weiterer Nachteil dieser Dichtungsmassen ist es, daß die Entsorgung von PVC-haltigen Abfällen zunehmend problematisch und kostenintensiv wird.

Neben den üblicherweise eingesetzten PVC-Dichtungsmassen sind aber auch Dichtungsmassen auf Polyuerthan-Basis bekannt. So sind beispielsweise in der US-PS 3,971,785 und in der GB-PS 1,374,745 Dichtungsmassen für Verpackungsbehälter beschrieben, die - ggf. blockierte - Polyisocyanatptäpolymere und mit Kohlendioxid blockierte Amine als Vernetzer enthalten. Aus der DE-OS 19 57 827 und der DE-OS 22 03 730 sind Dichtungsmassen bekannt, die hydroxylgruppenhaltige Polymere und Polysocyanate bzw. blockierte Präpolymere sowie einen Aktivator mit hydroxylhaltigen Polymeren und Aluminiumsilikat-Verbindungen enthalten.

Schließlich sind in der noch nicht veröffentlichten deutschen Patentänmeldung P 39 05 5 45.0 Dichtungsmassen für Verschlüsse von Verpackungsbehältern beschrieben, die ein flüssiges, blockiertes Diisocyanat, ein flüssiges Di- und/oder Polyamin, als Härter sowie ggf. weitere übliche Zusatzstoffe enthalten. Diese Dichtungsmassen zeichnen sich durch eine außerordentlich niedrige Migration bei lösemittel- und/oder fetthaltigen Füllgütern aus. Verbesserungsbedürftig ist allerdings das Migrationsverhalten gegenüber wäßrigen Füllgütern.

Der vorliegenden Erfindung lag somit die Aufgabe zugrunde, ein Verfahren zur Herstellung von Verschlüssen zum dichten Verschließen von Verpackungsbehältern zur Verfügung zu stellen, bei dem die auf den Innenseiten der Verschlüsse aufgebrachten Dichtungsmassen im Vergleich zu den üblicherweise eingesetzten Dichtungsmassen auf Basis von PVC-Plastisolen keine Weichmachermigration aufweisen, d.h. daß die Dichtungsmassen gegenüber lösemittel- und/oder fetthaltigen Füllgütern eine möglichst geringe Migrationsrate aufweisen sollen. Darüberhinaus sollen die Dichttungmassen aber auch eine möglichst niedrige Migration anderer Bestandteile des Dichtungsmaterials in das Füllgut aufweisen. Im Falle der Lebensmittelverpackungen soll die Dichtungsmasse insbesondere unter den Bedingungen der Sterilisation und Pasteurisation beständig sein und nicht in das Füllgut wandern. Für technische Verpackungen ist insbespndere Chemikalienbeständigkeit gefordert.

Gleichzeitig soll das Verfahren möglichst einfach und mit nur einem geringen Aufwand durchführbar sein. So sollen die Dichtungsmassen auf den gleichen Applikatiosanlagen verarbeitbar sein wie die herkömmlichen PVC-Plastisole. Zur problemlosen Handhabung soll es sich um ein lösungsmittelfreies thermoreaktives 1-Komponenten-System mit guter Lagerstabilität handeln. Schließlich sollen die Dichtungsmassen auch eine gute Haftung auf dem Verschluß, der sowohl mit einem in der Verpackungsindustrie üblichen Lack beschichtet als auch unbeschichtet sein kann, aufweisen.

Überraschenderweise wird diese Aufgabe durch ein Verfahren zur Herstellung von Verschlüssen zum dichten Verschließen von Lebensmittelverpackungsbehältern gelöst, bei dem auf die Innenseite der Verschlüsse eine Dichtungsmasse appliziert und eingebrannt wird. Das Verfahren ist dadurch gekennzeichnet, daß eine Polyvinylchlorid-freie Dichtungsmasse appliziert wird, die
A) 20 bis 95 Gew.-% mindestens einer Verbindung mit im Mittel mehr als zwei Isocyanatgruppen pro Molekül und/oder eines Präpolymers auf Basis eines Diisocyanates und eines Kettenverlängerungsmittels, wobei die Isocyanatgruppen jeweils blockiert sind,
B) 1,5 bis 30 Gew.-% mindestens eines Di- und/ oder Polyamins,
C) 0 bis 78,5 Gew.-% mindestens eines plastischen und/oder elastischen und/oder reaktiven organischen Polymers,
D) 0 bis 60 Gew.-% Pigmente und/oder Füllstoffe,
E) 0 bis 50 Gew.-% eines oder mehrerer reaktiver Verdünner und
F) 0 bis 20 Gew.-% Hilfs- und Zusatzstoffe, mit Ausnahme von Phthalsäureester-Weichmachern,
enthält, wobei die Summe der Gewichtsanteile der Komponenten A bis F jeweils 100 Gew.-% beträgt.

Gegenstand der vorliegenden Erfindung sind außerdem die nach dem erfindungsgemäßen Verfahren hergestellten Verschlüsse und diese verschlüsse enthaltende Verpackungsbehälter.

Nun sind aus der DE-OS 16 44 813 zwar Einbrennnlacke bekannt, die auf der Basis blockiertes Toluylendiisocyanat und Aminvernetzer aufgebaut sind, doch gibt diese Schrift keinen Hinweis, die Einbrennlacke als Dichtungsmasse einzusetzen. Auch erhält der Fachmann keinen Hinweis zur Lösung der der vorliegenden Anmeldung zugrundeliegenden Aufgabe. Der DE-OS 16 44 813 lag vielmehr die Aufgabel zugrunde, ein Verfahren zur Herstellung lagerstabiler Lacklösungen zur Verfügung zu stellen.

Weiterhin ist es aus der Produktinformation "Desmodur ® BL 1100" der Firma Bayer bekannt, daß mit diesem Isocyanat "Desmodur ® BL 1100" - ein flüssiges, blockiertes aromatisches Polyisocyanat- in Kombination mit cycloaliphatischen Diaminen als Reaktionspartner Filme mit gummielastischem Charakter erzielt werden. Aber auch diese Schrift gibt weder einen Hinweis auf die Verwendung derartiger Systeme als Dichtungsmassen bei der Herstellung von Verschlüssen für Verpackungsbehälter noch Hinweise für den Durchschnittsfachmann zur Lösung der der vorliegenden Anmeldung zugrundeliegenden Aufgabe. Vielmehr spricht die dort genannte schlechte Lösemittelbeständigkeit der Beschichtungen gegen die Verwendung derartiger Systeme als Dichtungsmassen von Verschlüssen für Verpackungsbehälter..

Im folgenden werden nun zunächst die in dem erfindungsgemäßen Verfahren eingesetzten Dichtungsmassen näher erläutert.

Als Komponente A der Dichtungsmassen geeignet sind alle Verbindungen mit im Mittel mehr als zwei Isocyanatgruppen pro Molekül sowie Präpolymere mit mindestens 2 NCO-Gruppen pro Molekül, die durch Umsetzung eines Diisocyanates mit einem Kettenverlängerungsmittel hergestellt worden sind, wobei die Isocyanatgruppen der Komponente A nicht frei, sondern in blockierter Form vorliegen. Bevorzugt werden blockierte Isocyanate eingesetzt, die bei Raumtemperatur flüssig sind. Weiterhin muß gewährieistet sein, daß im Falle der Lebensmittelverpackungen eine möglichst niedrige Migrationsrate der Aufbaukomponenten der Isocyanatverbindung, wie z.B. Blockierungsmittel, in das Füllgut auftritt.

Beispiele für geeignete Blöckierungsmittel der Komponente A sind insbesondere lebensmittelrechtlich unbedenkliche Verbindungen, wie z.B. Aminosäuren, cyclisierte Aminosäuren und Zucker, aber auch beispielsweise Malonsäure und Malonsäureester.

Weitere mögliche Blockierungsmittel sind auch Oxime, wie z.B. Acetoxim, Diethylketoxim, Acetophenonoxim, Cyclohexanonoxim, Cyclopentanonoxim, Formaldoxim, Acetaldoxim sowie Phenole und Caprolactame. Bei dem Einsatz dieser Blockierungsmittel ist aber darauf zu achten, daß keine Probleme durch eine Migration von Blockierungsmittelresten in das Füllgut auftreten.

Als Isocyanatkomponente geeignet sind alle Isocyanate, deren vollständig mit einem der oben genannten Blockierungsmittel umgesetzte Form bevorzugt flüssig ist und die zu Systemen führen, die bevorzugt Shore-A-Härten (DIN 53 505) zwischen 20 und 80 aufweisen. Außerdem sollte die Isocyanatkomponente bei Raumtemperatur nicht leicht flüchtig sein.

Als Beispiel für geeignete Isocyanate seien trimerisiertes 2,4- und 2,6-Toluylendiisocyanat, trimerisiertes Hexamethylendiisocyanat, gegebenenfalls in Mischung mit geringen Mengen monomerem Toluylen- bzw. Hexamethylendiisocyanat genannt. Geeignet sind ferner kettenverlängerte Diisocyanate, insbesondere kettenverlängertes Toluylen- oder Hexamethylendiisocyanat. Als Kettenverlängerungsmittel kommen Diole und/oder Triole und/oder Polyole sowie Mischungen von Diolen mit Tri- und/oder Polyolen zum Einsatz. Bevorzugt wird trimerisiertes oder mit einem Diol und/oder Triol kettenverlängertes Toluylendiisocyanat eingesetzt.

Die Komponente A wird in den Dichtungsmassen in einer Menge von 20 bis 95 Gew.-%, bevorzugt 50 bis 90 Gew.-%, jeweils bezogen auf das Gesamtgewicht der Dichtungsmasse, eingesetzt.

Zur Vernetzung der blockierten Isocyanate geeignete Verbindungen (Komponente B), die in einer Menge von 1,5 bis 30 Gew.-%, bevorzugt 1,5 bis 20 Gew.-%, jeweils bezogen auf das Gesamtgewicht der Dichtungsmasse eingesetzt werden, sind Di- und/oder Polyamine, insbesondere flüssige cycloaliphatische Diamine, wie z.B. 4,4-Diamino-3,3-dimethyldicyclohexylmethan, 4,4-Diaminodicyclohexylmethan, Polyoxipropylentriamin mit einem mittleren Molekulargewicht M_{W} von 400 bis 450 sowie flüssige Polyaminoamide, wie beispielsweise das Handelsprodukt "Versamid 100" der Firma Schering AG und durch Kondensation von di- und trimeren Fettsäuren mit aliphatischen Aminen hergestellte flüssige Polyaminoamide sowie Amine mit einem niedrigen Schmelzpunkt. Die Aminogruppen der eingesetzten Aminoverbindungen sind primärer und/oder sekundärer Natur.

Als weiteren Bestandteil können die Dichtungsmittel noch ggf. mindestens ein plastisches und/oder elastisches und/oder reaktives organisches flüssiges und/oder pulverförmiges Polymer enthalten. Diese Komponente C wird in den Dichtungsmassen in einer Menge von 0 bis 78,5 Gew.%, bevorzugt von 8,5 bis 30 Gew.-%, jeweils bezogen auf das Gesamtgewicht der Dichtungsmasse, eingesetzt.

Beispiele für geeignete Modifizierungsmittel (Komponente C) sind Styrol-Butadien-Mischpolymerisate, Styrol-Butadien-Styrol-Kautschuk, Polyethylen-Homound Copolymerisate, Ethylen-Vinylacetat-Copolymerisate, Vinylacetat-Ethylen-Copolymerisate, Polystyrol, Polyvinylalkohole, Polyamide, Acrylatpolymerisate, Nitrilkautschuke, Polyurethanpräkondensate, Epoxidharze, Polyester, Zucker u.a., wobei Polyvinylchlorid ausgenommen ist.

Durch die Auswahl der Art und Menge dieser Modifizierungsmittel können gezielt die Eigenschaften der Dichtungsmassen, wie z.B. die Flexibilität, gesteuert werden. Dies ist aber dem Fachmann bekannt und die jeweils, günstigste Art und Menge dieser Modifizierungsmittel, kann mit Hilfe weniger Routineversuche leicht ermittelt werden.

Als weiteren Bestandtel enthalten die Dichtungsmassen noch 0 bis 60 Gew.-%, bevorzügt 0 bis 30 Gew.-%, jeweils bezogen auf das Gesamtgewicht der Dichtungsmasse, Pigmente und/oder Füllstoffe, wie beispielsweise Titandioxid, synthetische Eisenoxide, organiche Pigmente, wie beispielsweise Phthalocyanine, Tartrazine, Ultramarinblau, Pigment Yellow 83, Pigment Orange 43, Pigment Orange 5, Pigment Rot 4 sowie Magnesium- und Aluminiumsilikate, amorphe und pyrogene Kieselsäure, Bariumsulfat, Ruß, Talkum, Kaolin und Kreide (Komponente D).

Zur Einstellung einer für die Applikation günstigen Viskosität können die Dichtungsmassen noch 0 bis 50 Gew.-%, bevorzugt 0 bis 20 Gew.-%, jeweils bezogen auf das Gesamtgewicht der Dichtungsmasse, eines oder mehrerer reaktiver Verdünner enthalten (Komponente E). Beispiele für geeignete Verbindungen sind bevorzugt mehrfunktionelle Amine, insbesondere cycloaliphatische Diamine, wie z.B. Cyclohexylpropylendiamin u.ä.

Daneben können aber auch Polyole, wie z.B. Propylenglykol und Diethylenglykol sowie reaktive Öle, wie z.B. OH-gruppenhaltige pflanzliche Öle, als reaktive Verdünner eingesetzt werden. Sie weisen jedoch den Nachteil einer im Vergleich zu Polyaminen geringeren Reaktivität auf. Schließlich können die erfindungsgemäß eingesetzten Dichtungsmassen noch 0 bis 20 Gew.-%, bevorzugt 0 bis 8 Gew.-%, bezogen auf das Gesamtgewicht der Dichtungsmassen, weiterer Hilfsund Zusatzstoffe (Komponente F), mit Ausnahme von Phthalsäureester-Weichmachern, enthalten. Beispiele hierfür sind Gleitmittel zur Einstellung der richtigen Drehmomentwerte bei Verschlüssen, die aufgeschraubt oder aufgedreht werden müssen. Geeignete Gleitmittel schließen fettige Säuren, wie Stearin- und Oleinsäure, Silikonöle, wie Dimethylpolysiloxan und Methylhydrogenpolysiloxan ein. Weiterhin als Komponente F eingesetzt werden Wachse und Kieselsäuren zur Erzielung bestimmter Fließverhalten (Thixotropierungsmittel) und im Falle von geschäumten Dichtungsmassen Treibmittel, wie z.B. Azodicarbonamide oder Sulfohydrazide.

Die Dichtungsmassen werden für die Verwendung in Gläser- und Flaschenverschlüssen hauptsächlich als geschäumte Dichtungsmassen eingesetzt. Allgemein bewirkt das Schäumen der Dichtungsmassen eine Erniedrigung der Shore-A-Härte (gemessen nach DIN 53 505), eine Erhöhung der Flexibilität, ein günstigeres Gewichts-Volumenverhältnis sowie die Erzielung einer besseren Abdichtfunktion durch eine bessere Verformbarkeit.

Die Herstellung der Dichtungsmassen erfolgt durch Mischen der einzelnen Komponenten, wobei gegebenenfalls zuerst die unlöslichen Anteile, z.B. Pigmente, zu der Komponente A zugesetzt und - soweit erforderlich - mit den in der Lackindustrie üblichen Dispergieraggregaten dispergiert werden. Bei der Herstellung von nicht geschäumten Dichtungsmassen wird das Mischen bzw. Dispergieren gewöhnlich unter Vakuum durchgeführt. Die so hergestellen Dichtungsmassen weisen im allgemeinen Shore-A-Härten (DIN 53 505) zwischen 20 und 80, bevorzugt zwischen 25 und 70 auf.

Die Auftragsmenge der Dichtungsmassen hängtvon der Geometrie des Verschlußteils, vom Verwendungszweck der Verpackung sowie davon ab, ob die Dichtungsmasse geschäumt ist oder nicht.

Zur Herstellug der Verschlüsse nach dem erfindungsgemäßen Verfahren werden die oben beschriebenen Dichtungsmassen auf die Innnnseite der Verschlüsse appliziert, bevorzugt mittels des bekannten sogenannten "Einfließverfahrens". Bei diesem Verfahren wird die Dichtungsmasse bei leicht erhöhter Temperatur, gewöhnlich etwa 40°C, in ungehärtetem pastenartigen Zustand aus einer oder mehren Düsen in die Verschlußteile gedrückt bzw. gespritzt, die mit der Innenseite nach oben auf einem Saugnapf oder dgl. mit hoher Drehzahl in Rotation versetzt werden. Aufgrund der Zentrifugalkräfte wird die Dichtungsmasse in die gewünschte Kontur und Gestalt überführt. Nachdem dieses Einfließen vollzogen ist, findet die Aushärtung der Dichtungsmassen bei Temperaturen zwischen 170°C und 230°C während einer Trockenzeit von 1 bis 5 min statt. Die Trocknung und die dafür eingesetzten Vorrichtungen sind ebenfalls bekannt und brauchen daher hier nicht näher erläutert werden.

Unter dem mit der Dichtungsmasse zu beschichtenden Verschluß werden alle Teile des Verpackungsmaterials verstanden, die mit dem Rumpf der Verpackungen verbunden werden, z.B, Kronkorken, z.B. für Bier-, Fruchtsaft- und Limonadenflaschen, Aluminium- und Kunststoffschraubverschlüsse für Flaschen und Gläser sowie weiteren in der Verpackungsindustrie üblichen Verschlüssen für Kannen, Eimer, Fässer usw.

Diese Verschlüsse können aus Metallen bestehen, wie Aluminium, Schwarzblech, Weißblech und verschiedenen Eisenlegierungen, die ggf. mit einer Passivierungsschicht auf Basis von Nickel-, Chrom- und Zinnverbindungen versehen sind. Die Dichtungsmasse kann bei dem erfindungsgemäßen Verfahren auf unbeschichtete oder beschichtete Verschlüsse appliziert werden. Als Beschichtungsmittel kommen in der Verpackungsindustrie übliche Lacke auf Epoxid-Phenolharz-Basis, Acrylatharz-Basis, Polyester-Basis oder Organosole in Frage. Diese Lacke sind aber bekannt (vgl. z.B. H. Kittel, Lehrbuch der Lacke und Beschichtungen, Band IV, Lack- und Beschichtungssysteme, Formulierung, Verlag W.A. Colomb in der H. Heenemann GmbH, Berlin-Ober-schwandorf 1976) und müssen daher hier nicht näher beschrieben werden.

Neben den Einschichtlackierungen werden, insbesondere für säurehaltige Füllgüter und für Fleisch als Füllgut, auch Zweischichtlackierungen mit einer Grundierung auf Epoxy-Phenolharz-Basis und einer Organosol-, Polyester- oder- Acrylat-Deckschicht eingesetzt.

Die nach dem erfindungsgemäßen Verfahren hergestellten Verschlüsse weisen insbesondere den Vorteil auf, daß die Dichtungsmassen im Vergleich zu den üblichen PVC-Dichtungsmassen keine Weichmachermigration aufweisen und eine gute Lösemittel- und Chemikalienbeständigkeit, gute Beständigkeit unter den Bedingungen der Pasteurisierung und Sterilisation sowie eine gute Haftung insbesondere zu beschichteten, aber auch zu unbeschichteten üblichen Untergründen besitzen.

Im folgenden wird die Erfindung anhand von Ausführungsbeispielen näher erläutert. Soweit nicht ausdrücklich etwas anderes festgestellt wird, beziehen sich alle Angaben über Teile und Prozentsätze auf Gewichtsangaben.

Zunächst werden aus den in Tabelle 1 angegebenen Komponenten durch Vermischen die Dichtungsmassen A bis F hergeptellt. Von diesen Dichtungsmassen A bis F wird mit Hilfe eines DIN-Auslaufbechers 8 mm die Viskosität (angelehnt an DIN-Norm 53 211) sowie die Shore-A-Härte (DIN-Norm 53 505) von Prüfkörpern gemessen. Die Ergebnisse dieser Untersuchungen sind ebenfalls in Tabelle 1 dargestellt.

Zur Untersuchung des Migrationsverhaltens der erfindungsgemäßen Dichtungsmassen im Vergleich mit Dichtungsmassen auf Basis von PVC-Plastisolen wurde zunächst die Dichtungsmasse E auf ein Metallblech in einer Schichtdicke appliziert, die dem normalen Auftragsgewicht in Verschlüssen entspricht (vql. Tabellen 6 bis 10), und während 5 min bei 190°C ausgehärtet. Für die Migrationstests wurde jeweils 1cm Oberfläche der Dichtungsmasse mit 2 ml der Prüflösung in Berührung gebracht. Die auswandernder Fremdstoffmengen wurden als Globalmigrate ih Form der Trockenrückstände ermittelt. Der chloroformlösliche Anteil der Trockenrückstände wurde gleichfalls festgestellt. Die Ergebnisse dieser Untersuchungen sind in Tabelle 3 dargestellt. Die Migrate wurden außerdem qualitativ und quantitativ auf organisch gebundenen Stickstoff, Phenol, Formaldehyd und Schwermetelle untersucht. Die Ergebnisse sind in Tabelle 4 zusammengestellt.

Außerdem wurde noch eine sensorische Prüfüng durchgeführt, indem man jeweils 10 ml bzw. 2 ml verschiedener Testlösungen (Leitungswasser, Mineralwasser, Apfelsaft) auf jeweils 1 cm Oberfläche der Dichtungsmasse unter den in Tabelle 4 angegebenen Bedingungen einwirken ließ. Die Testlösungen wurden von mehreren Prüfpersonen unabhängig voneinander im Dreieckstest gegenüber Blindlösungen geprüft, die nicht mit dem Dichtungsmaterial in Berührung gestanden hatten. Die Beurteilung erfolgte in Anlehnung an DIN 10 955. Die prüfergebnisse sind in Tabelle 5 dargestellt.

Zum Vergleich wurde außerdem die Dichtungsmasse V auf Basis eines weichmachhaltigen PVC-Plastisols analog zu den Dichtungsmassen A bis E untersucht. Die Zusammensetzung dieser Dichtungsmasse V ist in Tabelle 2 und die prüfergebnisse sind in den Tabellen 3 bis 5 dargestellt.

Weiterhin werden die Dichtungsmassen noch im Hinblick auf ihre Beständigkeit, Haftungseigenschaften und Dichtungswirkung bei Verwendung in Kronkorken (vgl. Tabelle 6 und 7), Flaschendrehverschlüssen (vgl. Tabelle 8,) und Gläserverschlüssen (vgl. Tabellen 9 und 10) bei unterschiedlicher Beanspruchung (z.B. Sterilisation) untersucht. Hierzu wird zunächst die Dichtungsmasse in der jeweils angegebenen Menge mittels eines in der Verpackungsbehälterindustrie üblichen Spritzautomatens appliziert und 5 min bei 190°C getrocknet. Zur Prüfung der Eigenschaften im Falle von Lebensmittelverpackungen werden die jeweiligen Behälter (Flaschen, Gläser usw., je nach Verschlußteil) mit verschiedenen Testlösungen (Wasser, 3 %ige Kochsalzlösung, 2 %ige Kochsalz- und 3 %ige Essigsäure-Lösung, 1- und 2 %ige Milchsäurelösung, 4 %ige Oxalsäurelösung und Lösung von 0,5 g Cystein in 1 l Wasser) gefüllt und 45 min bei 125°C sterilisiert. Anschließend werden Beständigkeit der Dichtungsmasse, Haftung und Dichtungswirkung untersucht und beurteilt.

Im folgenden werden nun die einzelnen Prüfmethoden näher erläutert:

### _{H}aftungsprüfung

Die Dichtungsmasse wird angeritzt und es wird versucht, die Dichtungsmasse manuell zu entfernen:
- gute Haftung: Dichtungsmasse nur unter Zerstörung entfernbar
- brauchbare Haftung: Dichtungsmasse mit hohem Aufwand (großer Widerstand) als Ring oder in Teilstücken abhebbar
- schlechte Haftung: leichte Entfernung der Dichtungsmasse vom beschichteten oder unbeschichteten Verschluß

### Dichtungsfunktionsprüfung

Es wird überprüft, ob nach der Beanspruchung das Vakuum erhalten geblieben ist bzw. ob Füllgut austritt.

### Beschaffenheitsprüfung

Es wird beurteilt, ob die Dichtungsmasse funktionstüchtig geblieben und/oder brüchig, rissig oder aufgequollen ist oder der Untergrund (Blech) sichtbar ist.

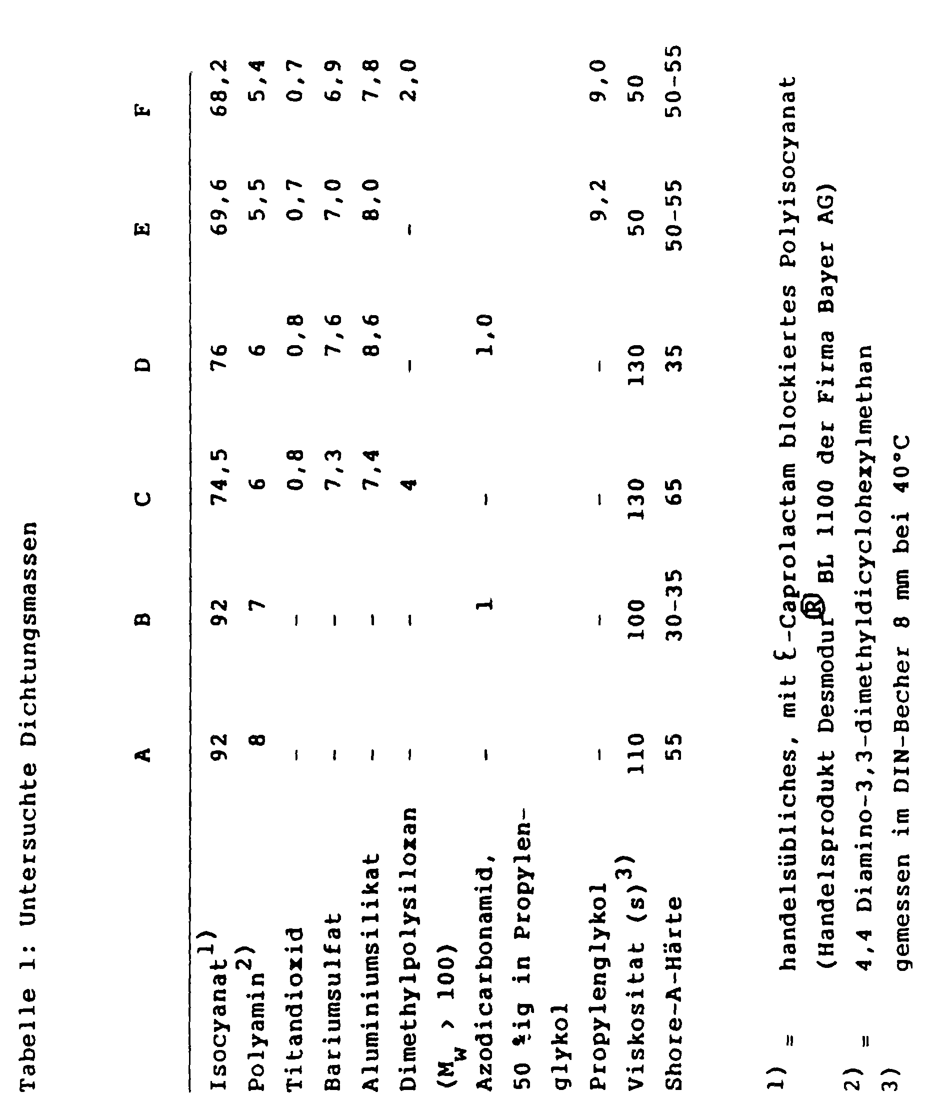

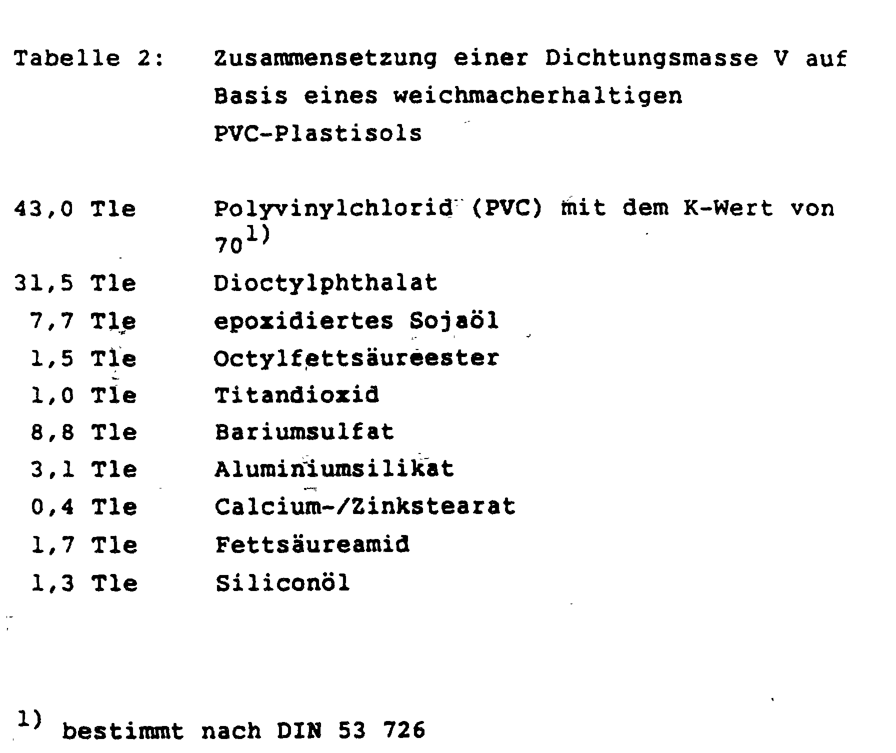

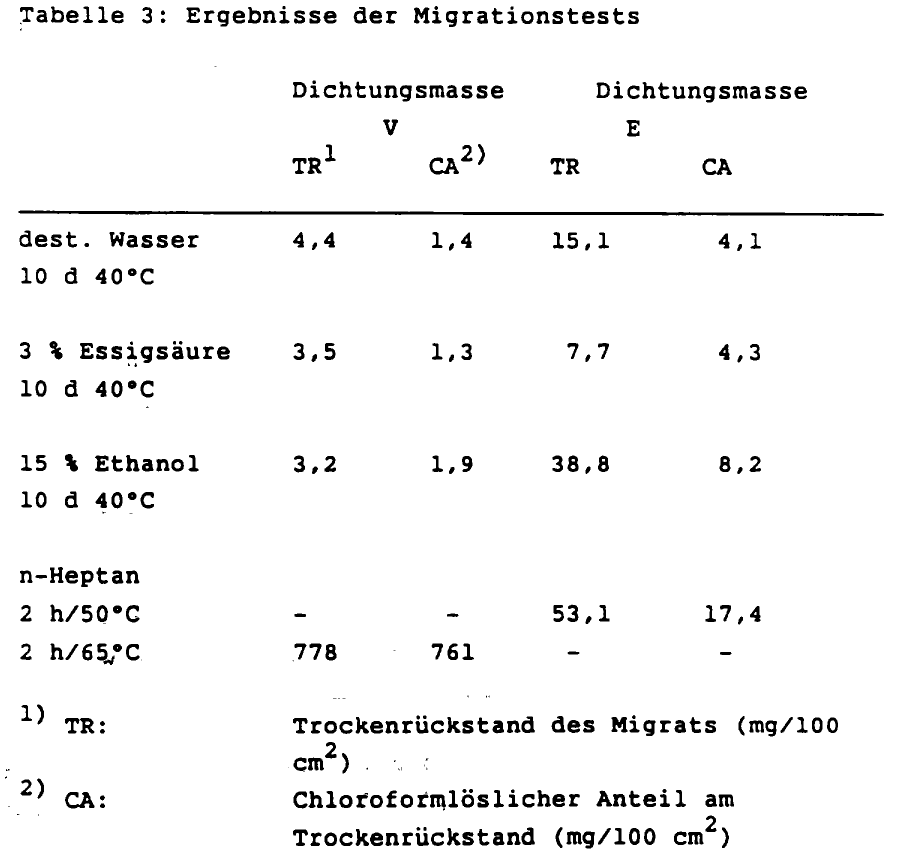

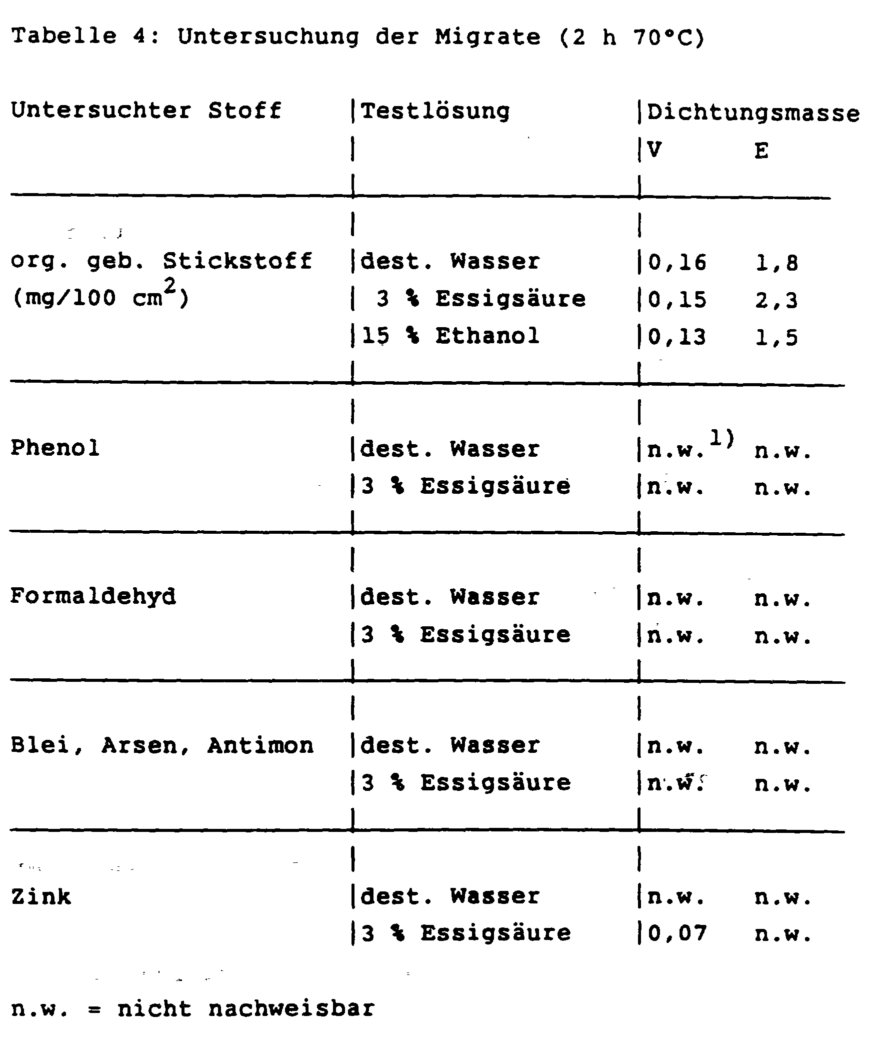

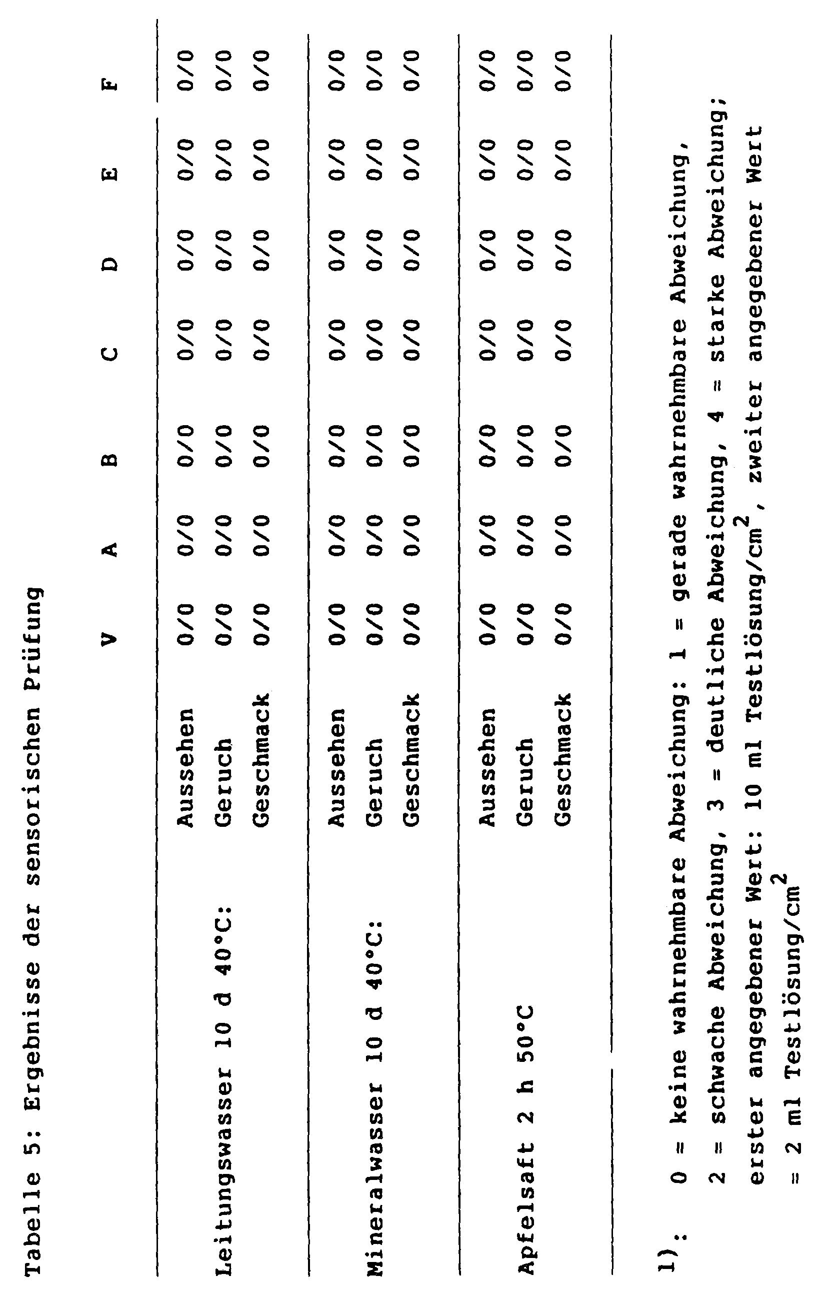

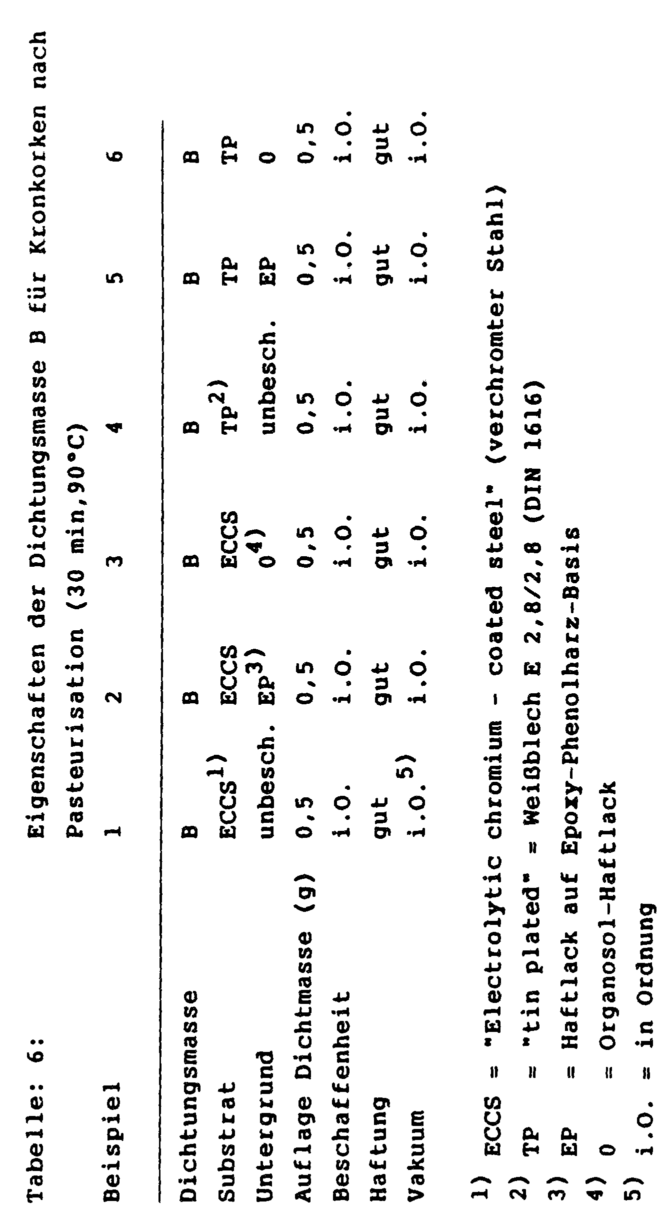

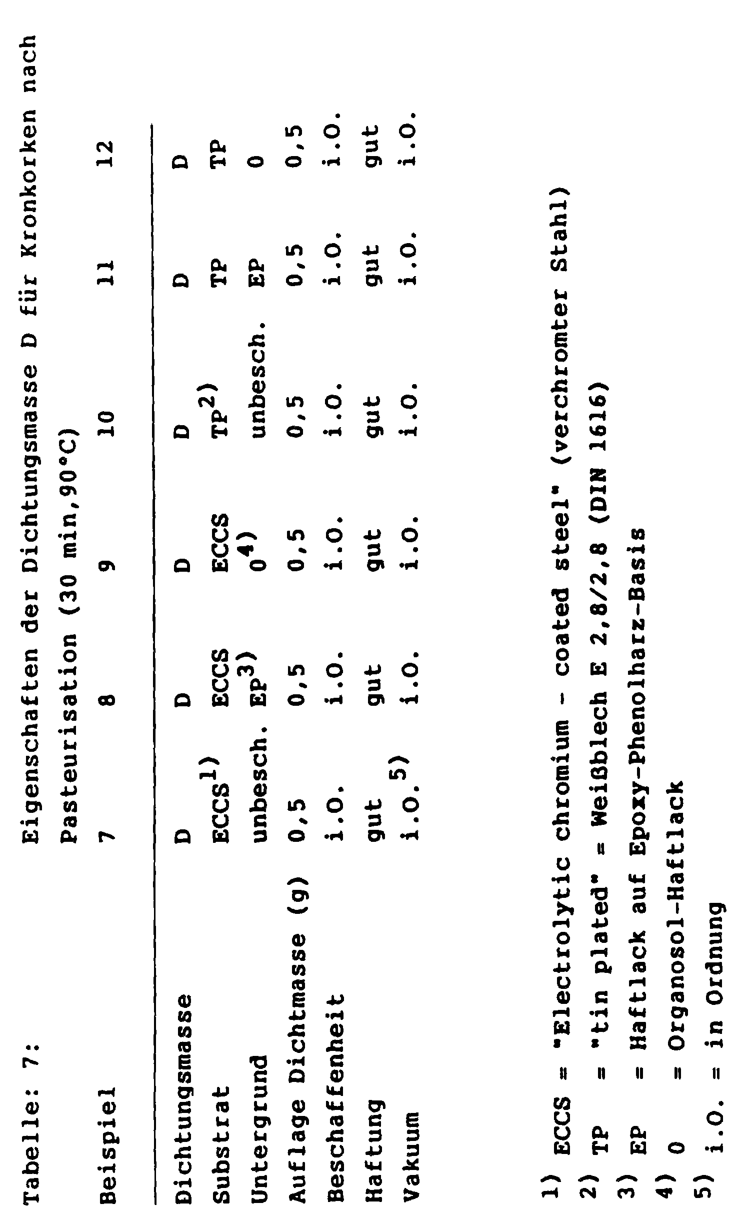

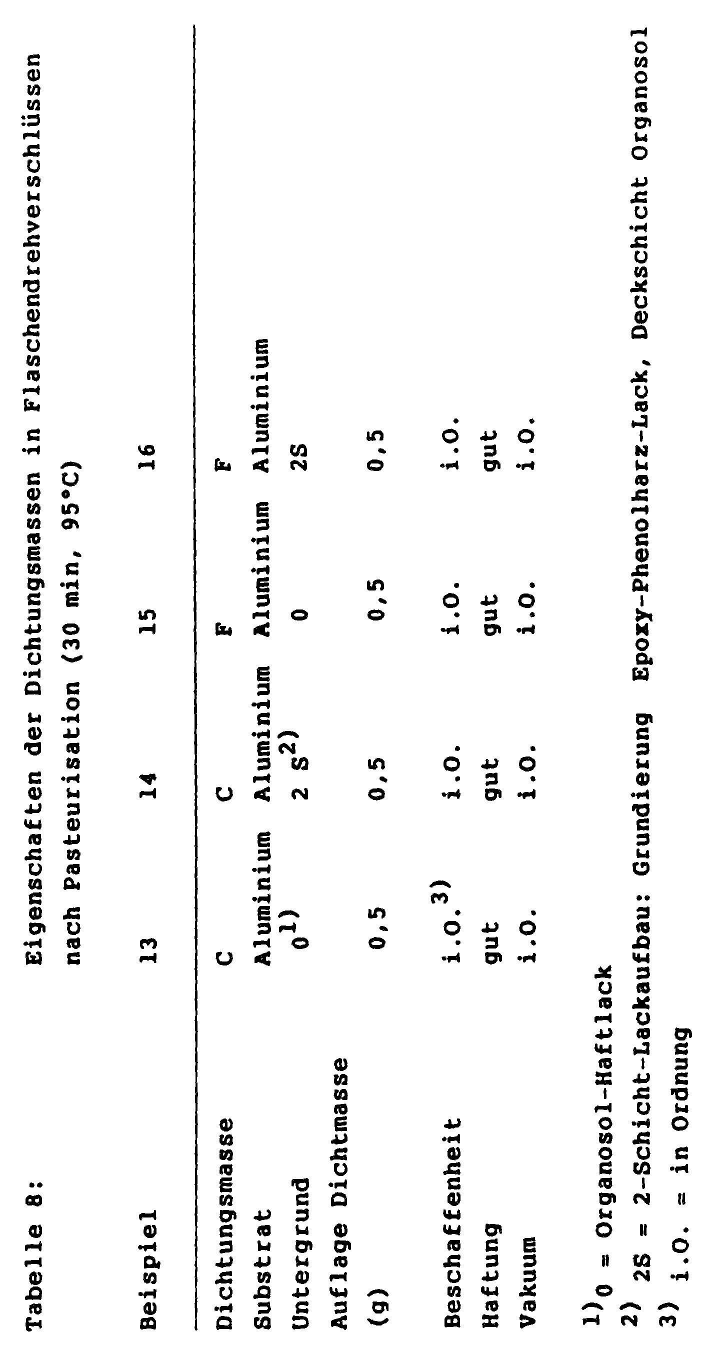

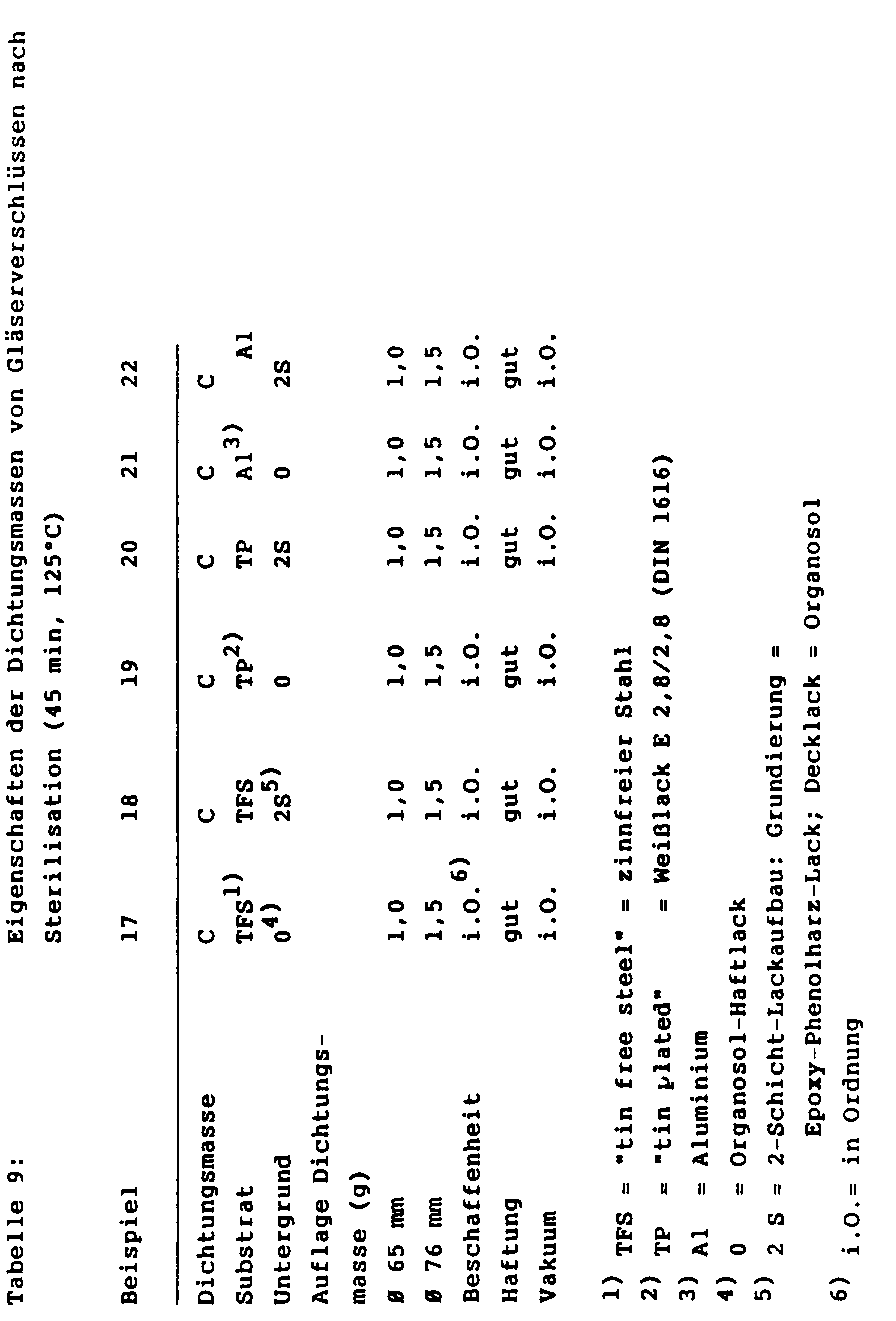

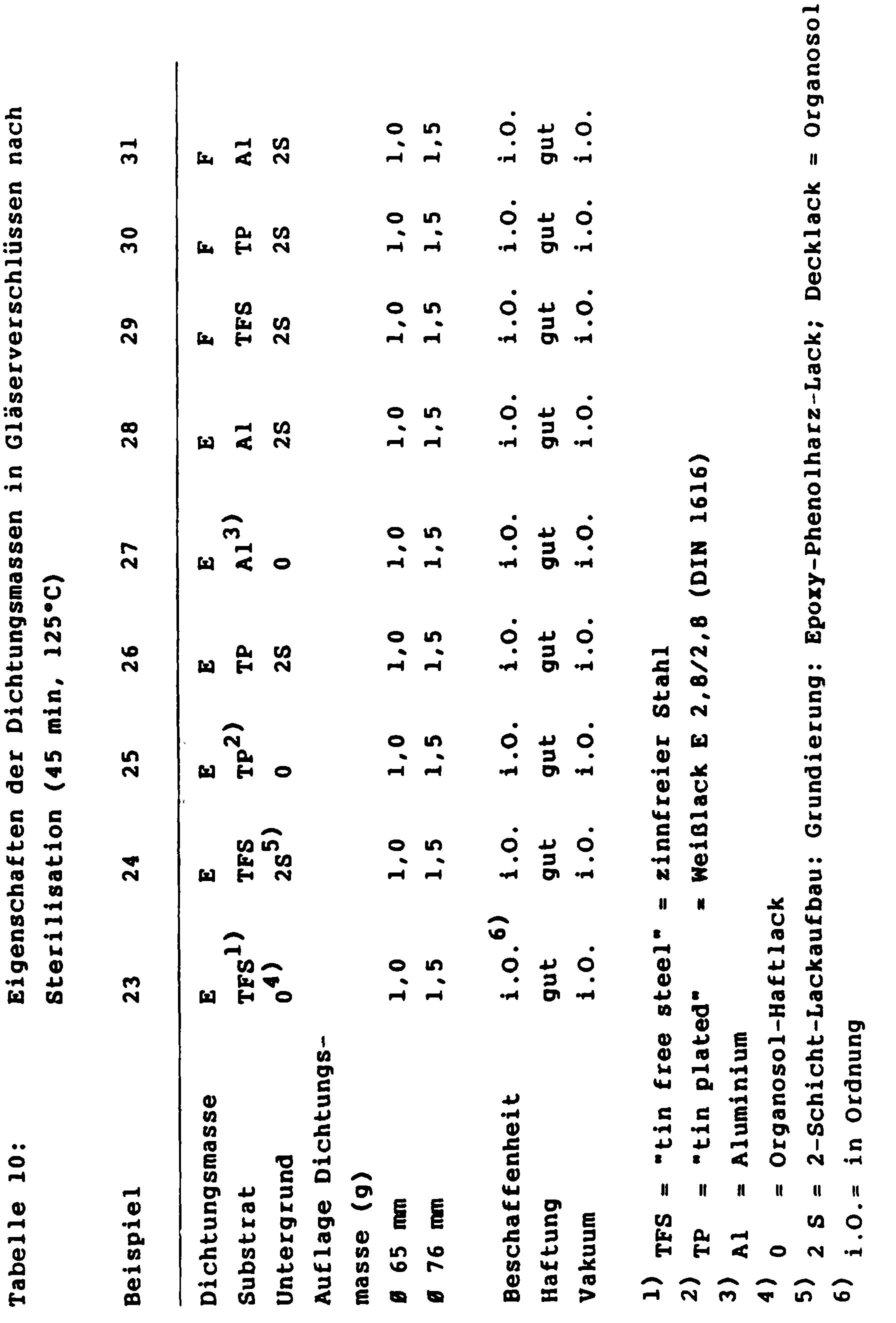

## Patentansprüche

1. Verfahren zur Herstellung von Verschlüssen zum dichten Verschließen von Lebensmittelverpackungsbehältern, bei dem auf die Innenseite der Verschlüsse eine Dichtungsmasse appliziert und eingebrannt wird, dadurch gekennzeichnet, daß eine Polyvinylchlorid-freie Dichtungsmasse appliziert wird, die
A) 20 bis 95 Gew.-% mindestens einer Verbindung mit im Mittel mehr als zwei Isocyanatgruppen pro Molekül und/oder eines Präpolymers auf Basis eines Diisocyanates und eines Kettenverlängerungsmittels, wobei die Isocyanatgruppen jeweils blockiert sind,
B) 1,5 bis 30 Gew.-% mindestens eines Di- und/ oder Polyamins,
C) 0 bis 78,5 Gew.-% mindestens eines plastischen und/oder elastischen und/oder reaktiven organischen Polymers,
D) 0 bis 60 Gew.-% Pigmente und/oder Füllstoffe,
E) 0 bis 50 Gew.-% eines oder mehrerer reaktiver Verdünner und
F) 0 bis 20 Gew.-% Hilfs- und Zusatzstoffe, mit Ausnahme von Phthalsäureester-Weichmachern,
enthält, wobei die Summe der Gewichtsanteile der Komponenten A bis F jeweils 100 Gew.-% beträgt.

2. Lebensmittelverpackungsbehälter mit einem Verschluß, bei dem auf die Innenseite des Verschlusses eine Dichtungsmasse appliziert und eingebrannt worden ist, dadurch gekennzeichnet, daß die Dichtungsmasse Polyvinylchlorid-frei ist und
A) 20 bis 95 Gew.-% mindestens einer Verbindung mit im Mittel mehr als zwei Isocyanatgruppen pro Molekül und/oder eines Präpolymers auf Basis eines Diisocyanates und eines Kettenverlängerungsmittels, wobei die Isocyanatgruppen blockiert sind,
B) 1,5 bis 30 Gew.-% mindestens eines Di- und/ oder Polyamins,
C) 0 bis 78,5 Gew.-% mindestens eines plastischen und/oder elastischen und/oder reaktiven organischen Polymers,
D) 0 bis 60 Gew.-% Pigmente und/oder Füllstoffe,
E) 0 bis 50 Gew.-% eines oder mehrerer reaktiver Verdünner und
F) 0 bis 20 Gew.-% Hilfs- und Zusatzstoffe, mit Ausnahme von Phthalsäureester-Weichmachern,
enthält, wobei die Summe der Gewichtsanteile der Komponenten A bis F jeweils 100 Gew.-% beträgt.

3. Verfahren oder Lebensmittelverpackungsbehälter nach Anspruch 1 oder 2, dadurch gekennzeichnet, daß die Dichtungsmasse
A) 50 bis 90 Gew.-% mindestens einer Verbindung mit im Mittel mehr als zwei Isocyanatgruppen pro Molekül und/oder eines Präpolymers auf Basis eines Diisocyanates und eines Kettenverlängerungsmittels, wobei die Isocyanatgruppen blockiert sind,
B) 1,5 bis 20 Gew.-% mindestens eines Di- und/ oder Polyamins,
C) 8,5 bis 30 Gew.-% mindestens eines plastischen und/oder elastischen und/oder reaktiven organischen Polymers,
D) 0 bis 30 Gew.-% Pigmente und/oder Füllstoffe,
E) 0 bis 20 Gew.-% eines oder mehrerer reaktiver Verdünner und
F) 0 bis 8 Gew.-% Hilfs- und Zusatzstoffe, mit Ausnahme von Phthalsäurerester-Weichmachern,
enthält, wobei die Summe der Gewichtsanteile der Komponenten A bis F jeweils 100 Gew.-% beträgt.

4. Verfahren oder Lebensmittelverpackungsbehälter nach einem der Ansprüche 1 bis 4, dadurch gekennzeichnet, daß als Komponente B 4,4-Diamino-3,3-dimethyldicyclohexylmethan und/oder Polyoxipropylentriamin mit einem mittleren Molekulargewicht M_{W} von 400 - 450 eingesetzt wird.

5. Verfahren oder Lebensmittelverpackungsbehälter nach einem der Ansprüche 1 bis 4, dadurch gekennzeichnet, daß als Komponente A flüssige Isocyanate und/oder als Komponente B flüssige Polyamine eingesetzt werden.

6. Verfahren oder Lebensmittelverpackungsbehälter nach einem der Ansprüche 1 bis 5, dadurch gekennzeichnet, daß als Komponente A Verbindungen auf Basis von Toluylendiisocyanat eingesetzt werden.

7. Verfahren oder Lebensmittelverpackungsbehälter nach einem der Ansprüche 1 bis 6, dadurch gekennzeichnet, daß als Komponente E Polyamine eingesetzt werden.

8. Verfahren oder Lebensmittelverpackungsbehälter nach einem der Ansprüche 1 bis 7, dadurch gekennzeichnet, daß der Verschluß zunächst mit einem Lack beschichtet wird, ehe die Dichtungsmasse appliziert und eingebrannt wird.

9. Verschluß für Lebensmittelverpackungsbehälter, dadurch gekennzeichnet, daß er nach einem Verfahren der Ansprüche 1 oder 3 bis 8 hergestellt worden ist.

## Claims

1. Process for the production of closures for tight sealing of food packaging containers, in which process a sealing composition is applied and baked on the inside of the closures, characterized in that a polyvinyl chloride-free sealing composition is applied which contains
A) 20 to 95% by weight of at least one compound having on average more than two isocyanate groups per molecule and/or of a prepolymer based on a diisocyanate and a chain-lengthening agent, the isocyanate groups being blocked in each case,
B) 1.5 to 30% by weight of at least one diamine and/or polyamine,
C) 0 to 78.5% by weight of at least one plastic and/or elastic and/or reactive organic polymer,
D) 0 to 60% by weight of pigments and/or fillers,
E) 0 to 50% by weight of one or more reactive diluents and
F) 0 to 20% by weight of auxiliaries and additives, with the exception of phthalic ester plasticizers,
the sum of the proportions by weight of the components A to F being 100% in each case.

2. Food packaging container having a closure in which a sealing composition has been applied and baked on the inside of the closure, characterized in that the sealing composition is polyvinyl chloride-free and contains
A) 20 to 95% by weight of at least one compound having on average more than two isocyanate groups per molecule and/or of a prepolymer based on a diisocyanate and a chain-lengthening agent, the isocyanate groups being blocked,
B) 1.5 to 30% by weight of at least one diamine and/or polyamine,
C) 0 to 78.5% by weight of at least one plastic and/or elastic and/or reactive organic polymer,
D) 0 to 60% by weight of pigments and/or fillers,
E) 0 to 50% by weight of one or more reactive diluents and
F) 0 to 20% by weight of auxiliaries and additives,
with the exception of phthalic ester plasticizers, the sum of the proportions by weight of the components A to F being 100% in each case.

3. Process or food packaging container according to Claim 1 or 2, characterized in that the sealing composition contains
A) 50 to 90% by weight of at least one compound having on average more than two isocyanate groups per molecule and/or of a prepolymer based on a diisocyanate and a chain-lengthening agent, the isocyanate groups being blocked,
B) 1.5 to 20% by weight of at least one diamine and/or polyamine,
C) 8.5 to 30% by weight of at least one plastic and/or elastic and/or reactive organic polymer,
D) 0 to 30% by weight of pigments and/or fillers,
E) 0 to 20% by weight of one or more reactive diluents and
F) 0 to 8% by weight of auxiliaries and additives, with the exception of phthalic ester plasticizers,
the sum of the proportions by weight of the components A to F being 100% in each case.

4. Process or food packaging container according to one of Claims 1 to 4, characterized in that 4,4-diamino3,3-dimethyldicyclohexylmethane and/or polyoxypropylenetriamine having an average molecular weight M_{W} of 400 - 450 is employed as component B.

5. Process or food packaging container according to one of Claims 1 to 4, characterized in that liquid isocyanates are employed as component A and/or liquid polyamines are employed as component B.

6. Process or food packaging container according to one of Claims 1 to 5, characterized in that compounds based on toluylene diisocyanate are employed as component A.

7. Process or food packaging container according to one of Claims 1 to 6, characterized in that polyamines are employed as component E.

8. Process or food packaging container according to one of Claims 1 to 7, characterized in that the closure is first coated with a coating before the sealing composition is applied and baked.

9. Closure for food packaging containers, characterized in that it has been prepared by a process of Claims 1 or 3 to 8.

## Revendications

1. Procédé de fabrication de fermetures en vue de la fermeture étanche d'emballages de conditionnement de produits alimentaires, lors duquel on procède à l'application, sur la face interne des fermetures, et à la cuisson d'une masse d'étanchéité, caractérisé en ce que l'on procède à l'application d'une masse d'étanchéité exempte de chlorure de polyvinyle, qui contient
A) de 20 à 95 % en poids d'au moins un composé ayant en moyenne plus de deux groupements isocyanates par molécule et/ou d'un prépolymère à base d'un diisocyanate et d'un agent de prolongation de chaîne, les groupements isocyanates étant à chaque fois bloqués,
B) de 1,5 à 30 % en poids d'au moins une diamine et/ou d'une polyamine,
C) de 0 à 78,5 % en poids d'au moins un polymère organique plastique et/ou élastique et/ou réactif,
D) de 0 à 60 % en poids de pigments et/ou de charges,
E) de 0 à 50 % en poids d'un ou de plusieurs diluants réactifs et
F) de 0 à 20 % en poids d'additifs et d'adjuvants, à l'exception de plastifiants aux esters de l'acide phtalique,
la somme des proportions en poids des composants A à F étant à chaque fois de 100 % en poids.

2. Emballage de conditionnement de produits alimentaires avec une fermeture, pour lequel on a procédé à l'application, sur la face interne de la fermeture, et à la cuisson d'une masse d'étanchéité, caractérisé en ce que la masse d'étanchéité est exempte de chlorure de polyvinyle et contient
A) de 20 à 95 % en poids d'au moins un composé ayant en moyenne plus de deux groupements isocyanates par molécule et/ou d'un prépolymère à base d'un diisocyanate et d'un agent de prolongation de chaîne, les groupements isocyanates étant à chaque fois bloqués,
B) de 1,5 à 30 % en poids d'au moins une diamine et/ou d'une polyamine,
C) de 0 à 78,5 % en poids d'au moins un polymère organique plastique et/ou élastique et/ou réactif,
D) de 0 à 60 % en poids de pigments et/ou de charges,
E) de 0 à 50 % en poids d'un ou de plusieurs diluants réactifs et
F) de 0 à 20 % en poids d'additifs et d'adjuvants, à l'exception de plastifiants aux esters de l'acide phtalique,
la somme des proportions en poids des composants A à F étant à chaque fois de 100 % en poids.

3. Procédé ou emballage de conditionnement de produits alimentaires selon la revendication 1 ou 2, caractérisé en ce que la masse d'étanchéité contient
A) de 50 à 90 % en poids d'au moins un composé ayant en moyenne plus de deux groupements isocyanates par molécule et/ou d'un prépolymère à base d'un diisocyanate et d'un agent de prolongation de chaîne, les groupements isocyanates étant à chaque fois bloqués,
B) de 1,5 à 20 % en poids d'au moins une diamine et/ou d'une polyamine,
C) de 8,5 à 30 % en poids d'au moins un polymère organique plastique et/ou élastique et/ou réactif,
D) de 0 à 30 % en poids de pigments et/ou de charges,
E) de 0 à 20 % en poids d'un ou de plusieurs diluants réactifs et
F) de 0 à 8 % en poids d'additifs et d'adjuvants, à l'exception de plastifiants aux esters de l'acide phtalique,
la somme des proportions en poids des composants A à F étant à chaque fois de 100 % en poids.

4. Procédé ou emballage de conditionnement de produits alimentaires selon l'une quelconque des revendications 1 à 4, caractérisé en ce que l'on utilise, en tant que composant B le 4,4-diamino-3,3-diméthyldicyclohexylméthane et/ou de la polyoxypropylènetriamine ayant un poids moléculaire M_{W} de 400 - 450.

5. Procédé ou emballage de conditionnement de produits alimentaires selon l'une quelconque des revendications 1 à 4, caractérisé en ce que l'on utilise, en tant que composant A, des isocyanates liquides et/ou, en tant que composant B, des polyamines liquides.

6. Procédé ou emballage de conditionnement de produits alimentaires selon l'une quelconque des revendications 1 à 5, caractérisé en ce que l'on utilise, en tant que composant A, des composés à base de diisocyanate de toluylène.

7. Procédé ou emballage de conditionnement de produits alimentaires selon l'une quelconque des revendications 1 à 6, caractérisé en ce que l'on utilise, en tant que composant E, des polyamines.

8. Procédé ou emballage de conditionnement de produits alimentaires selon l'une quelconque des revendications 1 à 7, caractérisé en ce que le fermeture est tout d'abord revêtue d'une laque, avant l'application et la cuisson de la masse d'étanchéité.

9. Fermeture pour emballages de conditionnement de produits alimentaires, caractérisée en ce qu'elle est fabriquée selon un procédé des revendications 1 ou 3 à 8.
